# EUROPÄISCHE PATENTSCHRIFT

(11) **EP 2 247 468 B1**
(45) Veröffentlichungstag und Bekanntmachung des Hinweises auf die Patenterteilung: **20.03.2013**
(21) Anmeldenummer: 09716917.1
(22) Anmeldetag: 21.01.2009
(51) Int. Cl.: B60R 11/04

(54) **STÖRLICHT BZW. SONNENBLENDE FÜR EINE KAMERA IN EINEM KRAFTFAHRZEUG**
STRAY LIGHT AND SUN SHIELD FOR A CAMERA IN A MOTOR VEHICLE
LUMIERE PARASITE ET ECRAN PARE-SOLEIL POUR UNE CAMERA DANS UN VEHICULE A MOTEUR

(30) Priorität: 03.03.2008 DE 102008012203
(43) Veröffentlichungstag der Anmeldung: 10.11.2010
(73) Patentinhaber: Daimler AG, 70327 Stuttgart (DE)
(72) Erfinder: HAHN, Stefan, 89075 Ulm (DE); DUDECK, Ingo, 71384 Weinstadt (DE); SEEKIRCHER, Jürgen, 73760 Ostfildern (DE)
(74) Vertreter: JENSEN & SON
(86) Internationale Anmeldenummer: PCT/EP2009/000334
(87) Internationale Veröffentlichungsnummer: WO 2009/109263

(56) Entgegenhaltungen:
- EP-A- 1 389 566
- DE-A1- 10 156 850
- DE-A1- 10 329 900
- JP-A- 2001 094 842
- US-A1- 2004 208 497

## Beschreibung

Die Erfindung betrifft eine Störlichtblende bzw. Sonnenblende für eine Kamera in einem Kraftfahrzeug nach dem Oberbegriff des Patentanspruchs 1.

Aus dem Stand der Technik, beispielsweise DE 101 56 850 A1 oder DE 103 29 900 A1 oder JP 11-078737 A, sind Kameras bekannt, welche in einem Kraftfahrzeug montiert und so ausgerichtet sind, dass sie durch eine Fensterscheibescheibe (beispielsweise die Windschutzscheibe) dieses Kraftfahrzeuges hindurch die Umgebung dieses Kraftfahrzeuges beobachten.

Um zu vermeiden, dass insbesondere an der Fensterscheibe reflektiertes Störlicht von der Kamera aufgenommen wird und so die Bildaufnahme der Umgebung des Fahrzeuges stört, wird in der JP 11-078737 A vorgeschlagen, vor der Optik der Kamera einen Polarisationsfilter vorzusehen, um dieses Störlicht zu blockieren. Nachteilig wirkt sich dabei aus, dass dieser Polarisationsfilter auch das Licht aus der Umgebung des Fahrzeuges teilweise abschwächt und so die Bildqualität verringert.

Es ist aber sehr wohl auch üblich (DE 101 56 850 A1 oder DE 103 29 900 A1) zwischen der Kamera oder aber zumindest der Kameraoptik und der Fensterscheibe eine Blende einzubringen, welche dem aus dem Innenraum des Fahrzeuges stammenden Störlicht, als auch dem an der Fensterscheibe gespiegelten Licht, den Zugang zu der Kamera bzw. der Kameraoptik versperrt. Derartige Blenden verhindern jedoch auch im Bereich des durch sie überdeckten Fensterabschnitts den Blick der Fahrzeuginsassen in die Umgebung des Fahrzeuges, was sich besonders dann nachteilig auswirkt, wenn durch die Blende die beiden Optiken einer Stereokamera gemeinsam von Störlicht abgeschirmt werden.

Aufgabe der Erfindung ist es eine Störlicht- bzw. Sonnenblende für eine Kamera in einem Kraftfahrzeug zuschaffen, welche optimalen Lichteintritt aus der Umgebung des Fahrzeuges in die Kamera ermöglicht und das Sichtfeld eines Fahrzeuginsassen nicht unnötig einschränkt.

Die Aufgabe wird durch eine Störlichtblende bzw. Sonnenblende für eine Kamera mit den Merkmalen des Patentanspruch 1 gelöst. Vorteilhafte Ausgestaltungen und Weiterbildungen der Erfindung werden durch die Unteransprüche beschrieben.

Bei der Störlichtblende für eine Kamera in einem Kraftfahrzeug ist die Kamera auf eine Fensterscheibe des Kraftfahrzeuges ausgerichtet und erfasst durch diese das Umfeld des Kraftfahrzeuges. Bei dieser Fensterscheibe kann es sich um eine beliebige Fensterscheibe des Kraftfahrzeuges, insbesondere aber um dessen Windschutzscheibe oder dessen Rückfenster, beispielsweise bei der Verwendung mit einer Rückfahrkamera, handeln. Zumindest im Bereich zwischen der Kamera bzw. deren Kameraoptik und der Fensterscheibe ist eine Blende zur Minimierung des Einwirkens von Streulicht auf die Kameraoptik angeordnet.

In erfinderischer Weise weist die Blende hierbei zumindest in einem Teilbereich eine richtungsabhängig unterschiedliche (anisotrope) optische Eigenschaft auf. Diese anisotrope optische Eigenschaft ist dabei derart gestaltet, dass zum einen die Kameraoptik von Licht aus dem Innenraum des Kraftfahrzeuges durch die Blende abgeschirmt wird, insbesondere von Licht, welches an der Fensterscheibe in Richtung der Kameraoptik gespiegelt wird, und dass zum anderen die Blende für Licht aus der Umgebung des Fahrzeuges derart optisch durchlässig ist, dass wenigstens ein Insasse des Kraftfahrzeuges die Umgebung des Fahrzeuges durch die Blende optisch wahrnehmen kann.

In vorteilhafter Weise wird durch die Erfindung somit erreicht, dass der wenigstens eine Insasse des Fahrzeuges durch die Blende hindurch die Umgebung des Fahrzeuges beobachten kann und somit dessen Sichtfeld nicht durch die Blende eingeschränkt wird.

In einer vorteilhaften Ausgestaltung der Erfindung wird die richtungsabhängig unterschiedliche optische Eigenschaft des Teilbereichs durch die Integration eines halbdurchlässigen Spiegels in die Blende realisiert wird. Es bietet sich hierbei in besonderer Weise an die Spiegelfläche so wenig als möglich spiegelnd auszuführen, so dass der wenigstens eine Insasse des Fahrzeugs möglichst wenig durch störende Spiegeleffekte gestört wird. Während einerseits das aus dem Innenraum stammende Störlicht an dem halbdurchlässigen Spiegel reflektiert wird, kann andererseits der Insasse durch diesen halbdurchlässigen Spiegel hindurch das Umfeld des Fahrzeuges, welches ansonsten durch die Blende verdeckt wäre, wahrnehmen.

In einer alternativen Ausgestaltung der Erfindung wird die richtungsabhängig unterschiedliche optische Eigenschaft des Teilbereichs durch die Integration einer mit einem Polarisationsfilter versehenen Öffnung beziehungsweise Scheibe in die Blende realisiert. Das Polarisationsfilter wird bevorzugt derart ausgelegt, dass das an der Fensterscheibe reflektierte Störlicht durch die Blende gesperrt wird, während der wenigstens eine Insasse des Fahrzeuges durch den Polarisationsfilter und somit die Blende hindurch das Umfeld des Fahrzeuges beobachten kann.

In einer weiteren alternativen Ausgestaltung der Erfindung wird die richtungsabhängig unterschiedliche optische Eigenschaft des Teilbereichs der Blende durch das Einbringen eines anisotropen Gitters in Blende realisiert. In analoger Weise ist es sehr wohl auch denkbar die richtungsabhängig unterschiedliche optische Eigenschaft des Teilbereichs der Blende durch das Einbringen von kanalförmigen Durchlässen in der Blende zu realisieren.

Um dem wenigstens einen Insassen des Fahrzeugs einen möglichst gleichförmigen Blick durch die Blende auf die Umgebung des Fahrzeuges zu ermöglichen bietet es sich an, die Öffnungen des anisotropen Gitters bzw. die kanalförmigen Durchlässe in gleichem Abstand und/oder in einer regelmäßigen Struktur zueinander anzuordnen.

In vorteilhafter Weise werden die kanalförmigen Durchlässe bzw. die Kanäle durch den Teilbereich der Blende so geführt, dass sie in Richtung der Augen des wenigstens einen Insassen ausgerichtet sind. Gewinnbringend werden die Abmaße der kanalförmigen Durchlässe bzw. der Kanäle so ausgelegt, dass unterschiedlich möglichen Kopfpositionen, bedingt insbesondere durch unterschiedliche Körpergröße oder Sitzhaltung, des wenigstens einen Insassen des Fahrzeuges Rechnung getragen wird.

Es ist denkbar die einzelnen Kanäle bzw. Durchlässe parallel zu einander anzuordnen bzw. auszurichten. Sehr wohl kann es aber auch gewinnbringend sein, wenn die Kanäle bzw. Durchlässen unter unterschiedlichen Winkeln die Blende durchdringen; insbesondere indem sie auf bevorzugt einen gemeinsamen Fluchtpunkt, vorteilhafter Weise im Bereich der Augen des wenigstens einen Insassen ausgerichtet sind.

In einer besonders vorteilhaften Ausgestaltung der Erfindung werden die kanalförmigen Durchlässe bzw. die Kanäle mittels einer Lamellenstruktur realisiert. Besonders gewinnbringend ist dies, wenn diese Lamellenstruktur bezüglich der Winkelausrichtung der einzelnen Lamellen verstellbar ausgestaltet wird, sodass es dem wenigstens einen Insassen des Fahrzeuges möglich ist, die Durchsicht durch die Blende auf die Umgebung um das Fahrzeug insbesondere im Hinblick auf seine Körpergröße oder bevorzugte Sitzposition einzustellen bzw. zu optimieren.

Nachfolgend wird die Erfindung mit Hilfe von Figuren noch im Detail erläutert. Dabei zeigt:
- Fig. 1: eine Kamera 1 mit einer Kameraoptik 2 mit zugeordneter Blende 3 wie aus dem Stand der Technik bekannt;
- Fig. 2: eine erste Ausgestaltung der Erfindung, bei welcher ein Teilbereich 10 der Blende 3 als ein halbtransparenter Bereich ausgebildet ist;
- Fig. 3: eine alternative Ausgestaltung der Erfindung, bei welcher ein Teilbereich 20 der Blende 3 mit einem anisotropen Gitter bzw. mit kanalförmigen Durchlässen ausgestaltet ist;
- Fig. 4: eine Ausschnittsvergrößerung der Ausgestaltung aus Figur 3, welche beispielhaft eine parallele Ausrichtung der kanalförmigen Durchlässe 21 aufzeigt;
- Figur 5: eine Ausschnittsvergrößerung der Ausgestaltung aus Figur 3, welche beispielhaft kanalförmigen Durchlässe 22 aufzeigt die derart ausgerichtet sind, dass sich der Lichtgang durch diese im Bereich des Auges 7 des wenigstens einen Insassen des Fahrzeuges schneiden;
- Figur 6: einen alternative Ausgestaltung der Erfindung, bei welcher die kanalförmigen Durchlässe 23 in einem Teilbereich der Blende mit Hilfe einer verstellbaren Lamellenstruktur realisiert werden.

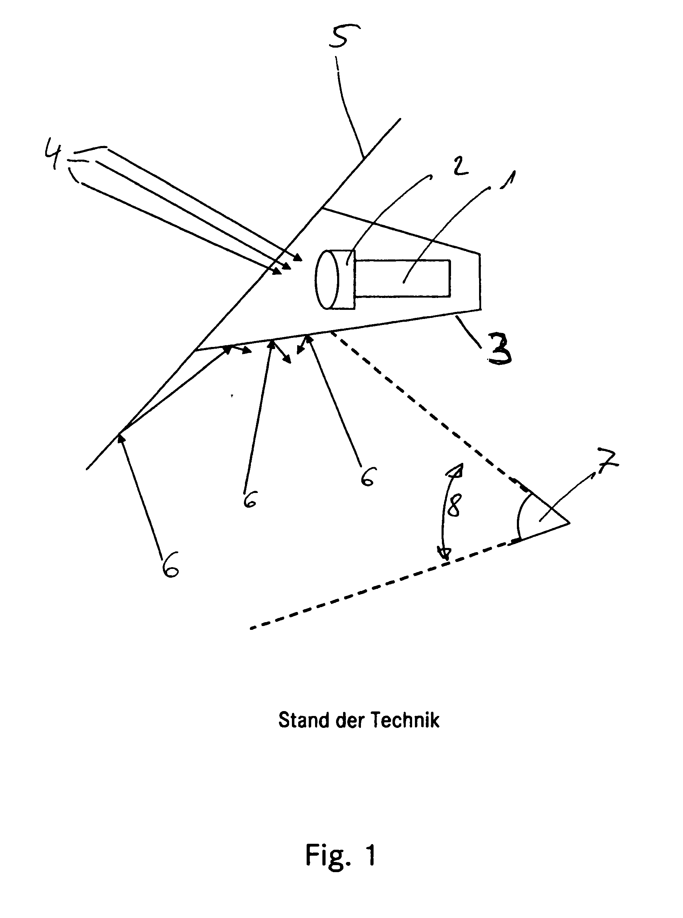

In der Figur 1 ist eine aus dem Stand der Technik, beispielsweise aus der DE 103 29 900 A1, bekannte Anordnung einer Kamera 1 in einem Kraftfahrzeug zur Beobachtung dessen Umfeldes durch eine Fensterscheibe 5 aufgezeigt. Die Kamera 1 und die zugeordnete Kameraoptik 2 sind von einer Blende 3 umschlossen, welche verhindert, dass Streulicht 6 aus einem Bereich im Inneren des Fahrzeuges in die Kameraoptik 2 einstrahlt. Licht 4 aus der Umgebung des Fahrzeuges kann durch die Fensterscheibe 5 hindurch von der Kamera 1 über deren Kameraoptik 2 erfasst werden. Der Sichtbereich 8 des Auges eines Insassen des Fahrzeuges wird durch die Blende 3 begrenzt bzw. eingeengt.

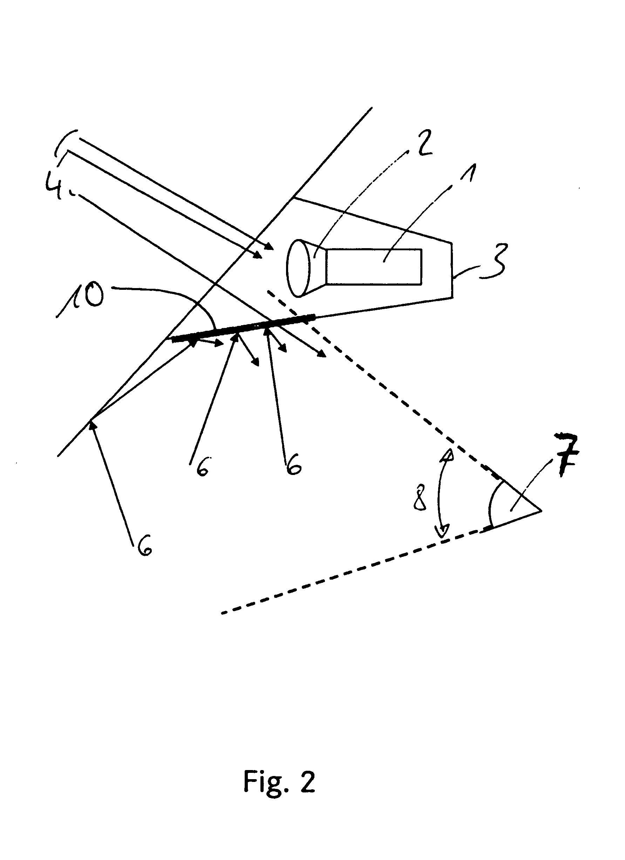

Bei der mit der Figur 2 schematisch aufgezeigten Ausgestaltung der Erfindung ist in einem Teilbereich der Blende 3 ein halbdurchlässiger Bereich 10 ausgebildet. Dieser Bereich 10 ist für aus dem Innenraum des Fahrzeuges auf die Blende 3 einstrahlendes Streulicht 6 nicht durchlässig, während aber aus dem Umfeld des Fahrzeugs stammendes Licht 4 dieses durchdringen kann, so dass der Insasse des Fahrzeuges durch den Teilbereich 10 der Blende 3 hindurch das Umfeld des Fahrzeuges erfassen kann. In besonders vorteilhafter Weise wird dieser halbdurchlässige Bereich 10 durch einen halbdurchlässigen Spiegel gebildet, oder aber analog kann dieser Bereich 10 durchsichtig ausgebildet und mit einem Polarisationsfilter versehen werden.

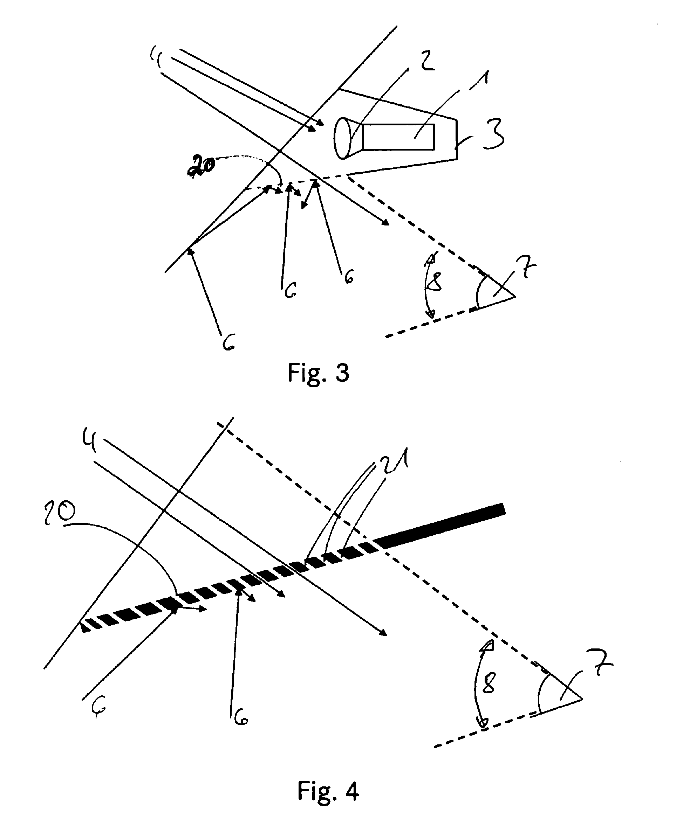

Bei der vorteilhaften Ausgestaltung, wie in Figur 3 aufgezeigt, wird ein Teilbereich 20 der Blende 3 mit Öffnungen oder kanalförmigen Durchlässen 21 versehen, um so Licht 4 aus der Umgebung des Fahrzeuges ein Durchdringen der Blende 3 in diesem Teilbereich 20 zu ermöglichen, so dass ein Auge 7 eines Fahrzeuginsassen durch den Teilbereich 20 der Blende 3 hindurch die Umgebung um das Fahrzeug wahrnehmen kann.

Die Figur 4 zeigt eine Vergrößerung des Teilbereichs 20 aus der Figur 3. Bei dem hier skizzierten Beispiel sind die kanalförmigen Durchlässe 21 parallel zueinander angeordnet.

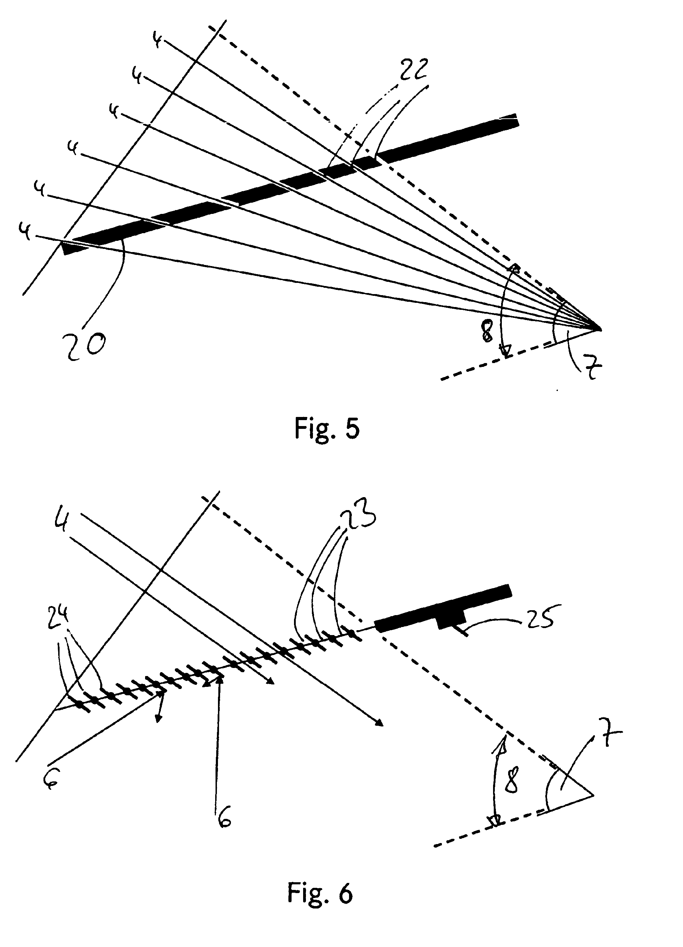

Bei der in der Figur 5 aufgezeigten alternativen Ausgestaltung der Erfindung sind die kanalförmigen Durchlässe 22 im Teilbereich 20 der Blende unter unterschiedlichem Winkel zueinander angeordnet, bevorzugt derart, dass die Strahlengänge des durch sie hindurch tretenden Lichts 4 aus der Umgebung des Fahrzeuges sich in einem Punkt schneiden; dies bevorzugt im Bereich des Auges 7 des Fahrzeuginsassen.

In der Figur 6 wird eine vorteilhafte alternative Ausgestaltung der Erfindung skizziert, bei welcher die Durchlässe 23 durch den Teilbereich 20 der Blende 3 mit Hilfe einer Lamellenstruktur realisiert werden. Dabei wird ist vorgesehen, dass die Winkelstellung der einzelnen Lamellen 24 mittels eines Verstellmechanismus durch Betätigung eines Verstellhebels 25 in ihrer Winkelausrichtung verstellt werden können. Auf diese vorteilhafte Weise kann der Insasse des Fahrzeuges seinen Durchblick durch den mit den Lamellen 24 versehen Teilbereich der Blende 3 selbsttätig an seine Körpergröße bzw. Sitzposition anpassen bzw. optimieren.

Bei dem wenigstens einen Insassen des Fahrzeuges, welchem durch die Erfindung durch die Blende 3 hindurch ein Einblick auf die Umgebung des Fahrzeuges gewährt wird, handelt es sich vorzugsweise um den Fahrer des Fahrzeuges.

## Patentansprüche

1. Störlichtblende für eine Kamera in einem Kraftfahrzeug,
bei der die Kamera auf eine Fensterscheibe des Kraftfahrzeuges ausgerichtet ist und durch diese das Umfeld des Kraftfahrzeuges erfasst,
und bei welchem zumindest im Bereich zwischen der Kameraoptik und der Fensterscheibe eine Blende zur Minimierung des Einwirkens von Streulicht auf die Kameraoptik angeordnet ist,
**dadurch gekennzeichnet,**
**dass** die Blende zumindest in einem Teilbereich eine richtungsabhängig unterschiedliche optische Eigenschaft aufweist, derart
**dass** die Blende die Kameraoptik von Licht aus dem Innenraum des Kraftfahrzeuges abschirmt, insbesondere von Licht, welches an der Fensterscheibe in Richtung der Kameraoptik gespiegelt wird
und **dass** die Blende für Licht aus der Umgebung des Fahrzeuges derart optisch durchlässig ist, dass wenigstens ein Insasse des Kraftfahrzeuges die Umgebung des Fahrzeuges durch die Blende optisch wahrnehmen kann.

2. Störlichtblende nach Patentanspruch 1,
**dadurch gekennzeichnet,**
**dass** die richtungsabhängig unterschiedliche optische Eigenschaft des Teilbereichs durch die Integration eines halbdurchlässigen Spiegels in die Blende realisiert wird.

3. Störlichtblende nach Patentanspruch 1,
**dadurch gekennzeichnet,**
**dass** die richtungsabhängig unterschiedliche optische Eigenschaft des Teilbereichs durch die Integration einer mit einem Polarisationsfilter versehenen Öffnung beziehungsweise Scheibe in die Blende realisiert wird.

4. Störlichtblende nach Patentanspruch 1,
**dadurch gekennzeichnet,**
**dass** die richtungsabhängig unterschiedliche optische Eigenschaft des Teilbereichs durch das Einbringen eines anisotropen Gitters in der Blende realisiert wird.

5. Störlichtblende nach Patentanspruch 1,
**dadurch gekennzeichnet,**
**dass** die richtungsabhängig unterschiedliche optische Eigenschaft des Teilbereichs durch das Einbringen von kanalförmigen Durchlässen in der Blende realisiert wird.

6. Störlichtblende nach einem der Patentansprüche 4 oder 5,
**dadurch gekennzeichnet,**
**dass** die Öffnungen im Gitter bzw. die kanalförmigen Durchlässe in gleichem Abstand oder in einer regelmäßigen Struktur zueinander angeordnet sind.

7. Störlichtblende nach einem der Patentansprüche 4 bis 6,
**dadurch gekennzeichnet,**
**dass** die Kanäle in Richtung des Auges des wenigstens einen Insassen ausgerichtet sind.

8. Störlichtblende nach Patentanspruch 7,
**dadurch gekennzeichnet,**
**dass** die Kanäle parallel zueinander angeordnet sind.

9. Störlichtblende nach Patentanspruch 7,
**dadurch gekennzeichnet,**
**dass** die Kanäle unter unterschiedlichem Winkel zueinander angeordnet sind.

10. Störlichtblende nach einem der Patentansprüche 5 bis 9,
**dadurch gekennzeichnet,**
**dass** die die kanalförmigen Durchlässe mittels einer Lamellenstruktur realisiert werden.

11. Störlichtblende nach Patentanspruch 10,
**dadurch gekennzeichnet,**
**dass** die Lamellenstruktur bzw. einzelne Lamellen in ihrer Ausrichtung verstellbar ausgestaltet sind.

## Claims

1. Stray light shield for a camera in a motor vehicle,
wherein the camera is directed onto a window of the motor vehicle and records the surroundings of the motor vehicle through this window, and wherein a shield for minimising the effect of stray light on the camera lens system is provided at least in the region between the camera lens system and the window,
**characterised in that**
the shield has an optical property which differs with direction in at least a sub-region, so that
the shield shields the camera lens system against light from the interior of the motor vehicle, in particular against light which is reflected on the window towards the camera lens system,
and **in that** the shield is optically permeable to light from the surroundings of the vehicle in such a way that at least one occupant of the vehicle can visually perceive the surroundings of the vehicle through the shield.

2. Stray light shield according to patent claim 1,
**characterised in that**
the optical property of the sub-region which differs with direction is implemented by integrating a semitransparent mirror into the shield.

3. Stray light shield according to patent claim 1,
**characterised in that**
the optical property of the sub-region which differs with direction is implemented by integrating an aperture or disc with a polarising filter into the shield.

4. Stray light shield according to patent claim 1,
**characterised in that**
the optical property of the sub-region which differs with direction is implemented by installing an anisotropic grid into the shield.

5. Stray light shield according to patent claim 1,
**characterised in that**
the optical property of the sub-region which differs with direction is implemented by installing channel-shaped openings into the shield.

6. Stray light shield according to patent claim 4 or 5
**characterised in that**
the openings in the grid or the channel-shaped openings respectively are arranged equidistant relative to one another or in a regular structure.

7. Stray light shield according to any of patent claims 4 to 6,
**characterised in that**
the channels are oriented in the direction of the eye of the at least one occupant.

8. Stray light shield according to patent claim 7,
**characterised in that**
the channels are arranged parallel to one another.

9. Stray light shield according to patent claim 7,
**characterised in that**
the channels are arranged at different angles with respect to one another.

10. Stray light shield according to any of patent claims 5 to 9,
**characterised in that**
the channel-shaped openings are implemented by means of a lamellar structure.

11. Stray light shield according to patent claim 10,
**characterised in that**
the lamellar structure or individual lamellae respectively are adjustable in their orientation.

## Revendications

1. Écran protégeant de la lumière parasite pour une caméra installé dans un véhicule à moteur, dans ledit écran la caméra est montée sur une vitre de fenêtre du véhicule à moteur et grâce auquel la caméra détecte l'environnement du véhicule, et au moins dans la zone de l'écran entre l'optique de caméra et la vitre de fenêtre un écran est disposé pour minimiser l'effet de la lumière diffuse sur l'optique de caméra, **caractérisé en ce que** l'écran présente au moins dans une zone partielle une propriété optique différente en fonction de la direction, de telle sorte que l'écran protège l'optique de la caméra de la lumière provenant de l'intérieur du véhicule, en particulier de la lumière qui est réfléchie sur la vitre de fenêtre dans la direction de l'optique de la caméra et **en ce que** l'écran est transparent à la lumière provenant de l'environnement du véhicule de telle sorte qu'au moins un occupant du véhicule puisse percevoir l'environnement du véhicule à travers l'écran.

2. Écran protégeant de la lumière parasite selon la revendication 1, **caractérisé en ce que** la propriété optique différente de la zone partielle en fonction de la direction est réalisée par l'intégration d'un miroir semi-transparent dans l'écran.

3. Écran protégeant de la lumière parasite selon la revendication 1, **caractérisé en ce que** la propriété optique différente de la zone partielle en fonction de la direction est réalisée par l'intégration d'une ouverture ou d'une plaque pourvue d'un filtre de polarisation dans l'écran.

4. Écran protégeant de la lumière parasite selon la revendication 1, **caractérisé en ce que** la propriété optique différente de la zone partielle en fonction de la direction est réalisée par l'application d'un grillage anisotrope dans l'écran.

5. Écran protégeant de la lumière parasite selon la revendication 1, **caractérisé en ce que** la propriété optique différente de la zone partielle en fonction de la direction est réalisée par l'introduction de passages en forme de canal dans l'écran.

6. Écran protégeant contre la lumière parasite selon l'une quelconque des revendications 4 ou 5, **caractérisé en ce que** les ouvertures dans le grillage ou dans les passages en forme de canal sont disposées à distance égale les unes des autres ou dans une structure régulière.

7. Écran protégeant contre la lumière parasite selon l'une quelconque des revendications 4 à 6, **caractérisé en ce que** les canaux sont alignés dans la direction de l'oeil d'au moins un occupant.

8. Écran protégeant contre la lumière parasite selon la revendication 1, **caractérisé en ce que** les canaux sont parallèles les uns aux autres.

9. Écran protégeant contre la lumière parasite selon la revendication 7, **caractérisé en ce que** les canaux sont disposés les uns par rapport aux autres selon un angle différent.

10. Écran protégeant contre la lumière parasite selon l'une quelconque des revendications 5 à 9, **caractérisé en ce que** les passages en forme de canal sont réalisés par une structure lamellaire.

11. Écran protégeant contre la lumière parasite selon la revendication 10, **caractérisé en ce que** l'orientation de la structure lamellaire ou de chacune des lamelles peut être réglée.
